# EUROPEAN PATENT APPLICATION

(11) **EP 1 074 177 A2**
(43) Date of publication of application: **07.02.2001**
(21) Application number: 00306486.2
(22) Date of filing: 28.07.2000
(51) Int. Cl.: A01K 5/02

(54) **Animal liquid feeder**

(30) Priority: 31.07.1999 GB 9917954
(71) Applicant: McFern, John, Colvend, Dalbeattie DG5 4QW (GB)
(72) Inventor: McFern, John, Colvend, Dalbeattie DG5 4QW (GB)
(74) Representative: Kennedy, David Anthony

(57) **Abstract**

An animal liquid feeder (1), particularly for use in the feeding of sheep, cows and similar animals, comprising a container (2) for holding liquid feed material, a lid (3) with an access aperture (6) and a rotatable feed dipper (8) arranged so that it extends through the access aperture. The arrangement is such that the feed dipper (8) rotates to collect liquid feed from the container (2) and presents the feed above the closed lid (3) making it easily available to animals.

## Description

This invention relates to an animal liquid feeder especially, but not exclusively, for use in the feeding of sheep, cows and similar animals.

In certain circumstances it has been found advantageous to provide animals such as sheep with a liquid feed dietary supplement. Indeed studies have shown significant advantages in providing liquid feed access to pregnant ewes as compared to conventional dry feeds in a trough.

Apparatus for dispensing liquid feed has previously been proposed. A typical arrangement comprises a container of liquid feed provided with a apertured lid. Means, such as a roller, are provided in the container to pick up the liquid feed for the animals to lick feed from.

A disadvantage of such known apparatus is that generally only one sheep at a time can gain access to the liquid feed through the aperture. As a result the more aggressive sheep tend to obtain more feed than they need while the more timid animals tend not to obtain enough and may also suffer from stress.

It is an object of the present invention to provide an animal liquid feeder which obviates or mitigates the disadvantages of the known prior art.

Embodiments of the present invention will now be described by way of example with reference to the accompanying drawings in which:
Figure 1 is a plan view of an animal liquid feeder in accordance with the present invention;
Figure 2 is an exploded side view of the animal liquid feeder of Fig.1; and
Figure 3 is a dismantled view of the dipper assembly of the liquid feeder of Fig.1.

Referring to the drawings an animal liquid feeder in accordance with the present invention is shown generally at 1.

The feeder 1 comprises a container 2, for liquid feed material, provided with a lid 3. Fasteners 4 allow the lid 3 to be fixed on the container 2 and may take the form of bolted latches or alternatively spring loaded latches. A filler 5 allows the container to be refilled without removing the lid 3. An aperture 6 is provided in the lid 3 for a dipper arrangement 7.

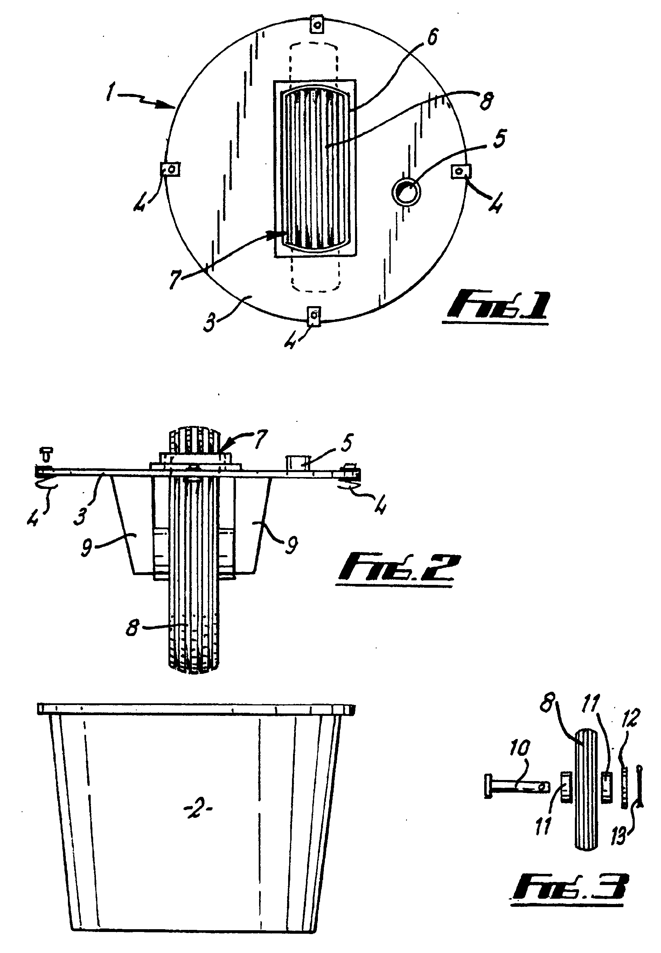

The dipper arrangement 7 consists of a circular feed dipper 8 in the form of a round profile pneumatic tyre having a grooved outer surface. The feed dipper 8 is held in place between a pair of support brackets 9 by an axle pin 10, a pair of spacers 11, a washer 12 and split pin 13. This arrangement can best be seen in Figure 3.

In use the liquid feeder 1 is filled with a quantity of liquid feed and placed where the animals are to be fed, for example sheep, can have easy access to it.

The feeder works by the lower side of the feed dipper 8 dipping into the feed such that when it is rotated by the sheep the section carrying the liquid feed moves round to the top where the sheep may lick the feed off.

The round profile of the feed dipper 8 and the grooves thereon ensure that a reasonable quantity of liquid feed is available for the sheep. Additionally because the feed dipper has a large surface area exposed it is possible for a number of sheep to feed at the same time much more easily than with previous feeders. This helps to reduce jostling and aggression between the sheep while feeding.

The basic design of feeder illustrated is particularly adapted for use by sheep but feeders of different sizes and shapes can be provided for use by other farm animals such as horses, cows and goats and also for zoo animals.

It is possible also to produce versions having more than one feed dipper if particular feeding circumstances require it.

The shape of the feeder is such that in addition to providing improved feeding access the risk of contamination by virus or dung is minimised. Further modifications and improvements may be incorporated without departing from the scope of the invention herein intended.

## Claims

1. An animal liquid feeder comprising a container for liquid feed, a closing lid for the container having an access aperture and a rotatable feed dipper arranged to extend through said aperture the arrangement being such that the feed dipper rotates to collect feed from the container and presents a surface carrying feed above the closing lid.

2. An animal liquid feeder as in Claim 1, where the rotatable feed dipper comprises a doughnut shaped arrangement having an outer surface most preferably provided with a series of grooves or indentations to increase the liquid feed carrying capacity.

3. An animal liquid feeder as in any of the preceding Claims, where the feed dipper may for example be a pneumatic tyre.

4. An animal liquid feeder as in any of the preceding Claims, where several feed dippers may be provided on a single container.

5. An animal liquid feeder as in any one of Claims 1-4, where the lid may be attached to the container by fasteners.

6. An animal liquid feeder as in Claim 5, where the fasteners are bolted latches.

7. An animal liquid feeder as in Claim 5, where the fasteners are spring loaded latches.
